Europäisches Patentamt

European Patent Office

Office européen des brevets

(19)

(11) Publication number : **0 479 449 A1**

(12) **EUROPEAN PATENT APPLICATION**

(21) Application number : **91308548.6**

(22) Date of filing : **19.09.91**

(51) Int. Cl.⁵ : **B60N 2/02, F16D 43/02**

(30) Priority : **22.09.90 GB 9020704**

(43) Date of publication of application :
**08.04.92 Bulletin 92/15**

(84) Designated Contracting States :
**DE ES FR GB IT SE**

(71) Applicant : **Dunlop Cox Limited**
**Glaisdale Parkway**
**Nottingham NG8 4GP (GB)**

(72) Inventor : **Babbs, Frederick William**
**102A Cropwell Road**
**Radcliffe on Trent, Nottingham NG12 2JG (GB)**

(74) Representative : **Treves, Barry William et al**
**BTR Group Patent & Trade Mark Service P.O.**
**Box 504**
**Erdington Birmingham B24 9QH (GB)**

(54) **Drum lock mechanism.**

(57)    Drum lock mechanism for a seat height adjustment device comprising a plurality of circlips (22 ;122) arranged inside a drum, each acting as a friction element to apply a braking force.
    A spring member (16 ;116) is attached between the ends of the circlips (22 ;122).

Fig. 1

**EP 0 479 449 A1**

This invention relates to a drum lock mechanism particularly but not exclusively for use with a vehicle seat height adjustment device.

Where a vehicle is provided with a height adjustment mechanism it is necessary to provide a lock mechanism to prevent the seat position changing inadvertently e.g. due to the movement of the person sitting on the seat. When it is required to alter the seat height by means of the adjustment device the lock mechanism must be rendered inoperable during the height adjustment i.e. while the seat is being raised or lowered, but must be operable immediately the seat is stationary.

Known drum lock mechanisms often suffer from the disadvantage that there is an amount of free play between the component parts of the mechanism leading to inaccuracies in height adjustment and/or an unwanted rattling noise, and it is an object of the present invention to provide a mechanism which does not suffer from this disadvantage and is relatively simple and cheap to manufacture.

According to the invention a drum lock mechanism comprises in combination,
a rotatable input drive element,
a rotatable output drive element driveably connected to the input drive element through first and second drive members and a spring member, and
a drum having an interior cylindrical surface, wherein at least one friction member is provided and is normally operably engaged by the spring member to press the friction member into braking engagement with the interior surface, and
the first drive member is constructed to rotate with the input drive element and is engageable with the spring member on application of a torque to rotate the input element to release the braking pressure on the friction member sufficiently to allow rotation of the input and output drive elements.

Preferably the second drive member is constructed to rotate with the output drive element and is engageable with the spring member on application of a torque to tend to rotate the output drive member to increase the braking pressure on the friction member and thereby prevent rotation of the output drive member.

In a preferred form of the invention three friction members each in the form of a circlip are provided, the outer diameter of each circlip in the unassembled condition being slightly more than the diameter of the interior surface of the drum; the first drive member is in the form of a plate of generally circular form having a diameter slightly less than that of the interior surface of the drum, part of the outer periphery of the plate being cut away; the second drive member is in the form of a plate of circular form having a diameter slightly less than the interior surface of the drum, part of the outer surface of the plate being cut away and also formed with a tongue which extends generally perpendicularly to the plane of the plate and generally parallel to the plate axis; and the spring member comprises a length of wire bent so as to have two end portions which extend parallel to the axis of rotation of one of the drive elements through holes in the ends of the circlips and lie in braking engagement with the sides of the cut-away portion in the plate forming the first drive member and a central portion extending radially with respect to the axis of the said one drive element and through a slot in the tongue in the plate forming the second drive member.

Preferably also one of the drive elements may be formed with an aperture or bore into which the other of the drive elements fits.

Two embodiments of the invention, each a drum lock mechanism for use in conjunction with a seat height adjustment device will now be described by way of example with reference to the accompanying drawings, of which:

Figure 1 is a cross-section through the drum lock of the first embodiment on an enlarged scale;
Figure 2 is a front view of the drum lock, partially in section;
Figure 3 is a plan view of the second drive member;
Figure 4 is a front view of the second drive member;
Figure 5 is a front view of the spring member;
Figure 6 is a plan view of the spring member;
Figure 7 is a front view of the first drive member;
Figure 8 is a front view of a friction member.
Figure 9 is a cross-section through the drum lock of the second embodiment, the operating handle being omitted for clarity;
Figure 10 is a side view, partly in cross-section, of the drum lock shown in Figure 9;
Figure 11 is a cross-sectional view of the drum of the drum lock shown in Figure 9;
Figure 12 is a side view of the drum shown in Figure 11;
Figure 13 is a front view of a friction member;
Figure 14 is a front view of the spring member;
Figure 15 is a plan view of the spring member;
Figure 16 is a longitudinal cross-section through the second drive member;
Figure 17 is a front view of the second drive member;
Figure 18 is a side view of part of the first drive member; and
Figure 19 is a front view of the first drive member.

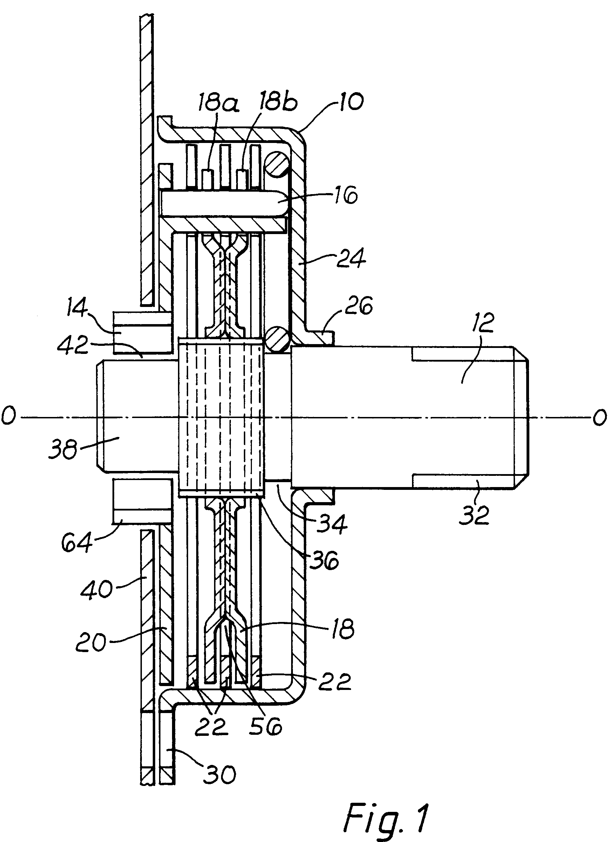

As can be seen in Figure 1 the drum lock of the first embodiment comprises a generally cylindrical drum 10, an input drive element in the form of a shaft 12, an output drive element in the form of a shaft 14, a spring member 16, a first drive member 18, a second drive member 20 and three friction members 22.

The drum 10 which provides a housing for at least part of the mechanism has a circular opening formed in the centre of its front face 24, the opening being edged by a circular flange 26 and in which the input drive shaft 12 is freely rotatably located. The rear of the drum is open, and is generally filled by means of the generally disc-shaped second drive member 20. At the rear edge of the drum three equispaced lugs 28 are provided, each lug being provided with a circular hole 30 for receiving a bolt or a screw by means of which the whole mechanism may be mounted for example on the side of a vehicle seat frame 40.

The input drive shaft 12 comprises an outer splined portion 32 on which may be mounted a suitable knob or handle (not shown) so that the shaft 12 may be rotated manually by a person sitting on the seat to adjust the seat height.

Immediately on the inside of the drum the input shaft 12 is provided with a shallow groove 34 for receiving part of the spring member 16. Since the spring member 16 is located against the inside of the front surface 24 of the drum 10, this arrangement serves to locate the shaft 12 in the correct position. Immediately axially inwards of the groove is a portion 36 of the shaft surface formed with straight knurling i.e. a series of shallow grooves and ridges extending parallel to the shaft axis 0-0. The first drive member 18 is pressed on to this portion 16 of the input drive shaft 12 during manufacture of the mechanism and is thus held by the knurling so as to rotate with the shaft. At the rear end of the input drive shaft is a short portion 38 of reduced diameter which freely locates in a bore 42 in the output drive shaft 14.

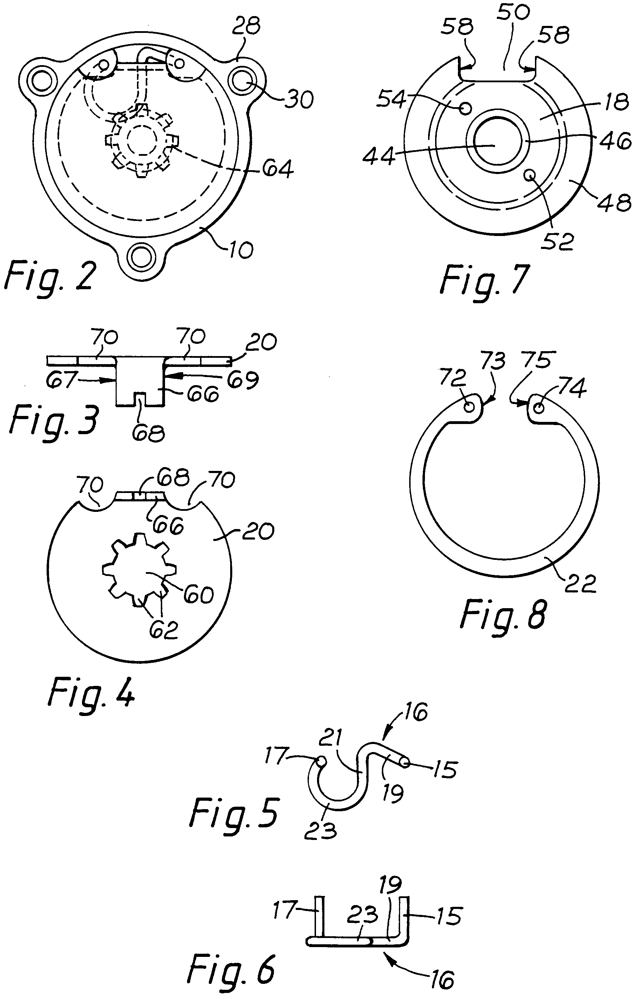

The first drive member 18, shown in Figures 1 and 7 comprises two similar flat discs 18a and 18b, formed at their centres with circular apertures 44 each with an edge flange 46 and at their peripheries with a displaced annular region 48. Part of each annular region 48 is formed with a cut-away portion 50 as shown in Figure 7. The discs 18a and 18b are formed by appropriate pressing and piercing operations and are spot welded at 52 and 54 in back-to-back relationship so that a peripheral groove 56 is formed between the annular regions 48 on each disc 18a and 18b forming the first drive member 18. As stated above the drive member is pressed on to the knurled region 36 of the input drive shaft 12. In the assembled mechanism the two parallel end portions 15 and 17 of the spring member 16 touchingly engage the two sides 58 of the cutaway portion 50.

The second drive member 20 comprises a circular disc formed at its centre with a generally circular aperture 60, the circumference of which is formed with grooves 62 as can be seen in Figure 4. These grooves receive and tightly hold the teeth 64 of a gear wheel which forms the output drive shaft 14. The edge of the disc is formed with a generally square tongue 66 which extends generally perpendicularly to the plane of the disc. When assembled in the mechanism the two sides 67 and 69 of the tongue abut the end faces 73 and 75 of the circlips 22 as will be described. At the centre of the tongue further from the disc is a short slot extending inwards from the tongue edge. The disc is formed at each side of the tongue with cut-away portions 70.

The spring member 16 is formed from spring wire into the shape shown in Figures 5 and 6. There are two parallel end portions 15 and 17 which in the mechanism extend parallel to the axis 0-0 of the shafts 12 and 14. In between there is a portion 19, extending circumferentially close to the interior surface of the drum, a central portion 21 extending radially of the drum, and a semi-circular portion 23. In the mechanism the two end portions 15 and 27 touchingly engage the sides 58 of the cut-away portion 50 of the first drive member 18, as stated above, and pass freely through the cut-away portions 70 of the second drive member. The central portion 21 extends through the slot 68 in the tongue 66 in the second drive member to prevent rattle. Part of the semi-circular portion seats in the groove 34 in the input drive shaft.

The three friction members 22 are all standard circlips formed from spring steel sheet and have the shape shown in figure 8. Before being assembled into the mechanism, the outer diameter of each circlip is slightly greater than the diameter of the interior surface of the drum. The two end parts of the circlips are formed with small holes 72 and 74. In the assembled mechanism, the holes 72 receive the end portion 17 of the spring member 16, the holes 74 receive the end portion 15 of the spring member 16, the end face 73 abuts the side 67 of the tongue 66 and the end face 75 abuts the other side 69.

To assemble the mechanism the first drive member 18 is pressed on to the knurled portion 36 of the input drive shaft 12 and the second drive member pressed on to the output drive shaft 14. The spring member 16 is placed in the drum from the rear against the inside of the front surface of the drum in the position shown in figures 1 and 2. One circlip is placed in the drum with the holes 72 and 74 receiving the end parts 17 and 15 of the spring member respectively. A second circlip is placed loosely in the peripheral groove 56 in the first drive member 18, and the subassembly of input drive shaft 12 and first drive member placed in position so that the splined portion 32 protrudes through the front of the drum. The apertures 72 and 74 on the second circlip are engaged on the end portions 17 and 15 of the spring member. The third circlip is then positioned similarly with respect to the spring member. The sub-assembly of output drive shaft 14 and second drive member 20 is then positioned so that the tongue 66 passes through the cutout portion 50 of the first drive member and the slot 68 tightly engages the central portion 21 of the spring member 16. In the unassembled condition the outer diameter of the three circlips is slightly more than the internal diameter of the drum 10 so when assembled the circlips each press outwards. This outwards pressure is assisted by the action of the curved portion 23 of the spring member 16.

The whole mechanism is attached to a seat frame 40 by three bolts (not shown), the frame thus preventing the various components of the mechanism from coming apart. The gear wheel forming the output drive shaft 14 is attached to a gear train and rack forming the seat height adjustment device (not shown). A knob (not shown) is attached to the splined portion 32 of the input drive shaft 32.

Normally, since the three circlips press against the interior surface of the drum there is no rotation of either input or output drive shafts. The weight of a person sitting on the seat creates a torque which is applied to the output drive shaft 14 which tends to rotate and carry the second drive member 20 with it. However since the sides 67 and 69 of the tongue 66 of the second drive member abut the end faces 73 and 75 of the circlips 22 and the tongue 66 is attached to the central portion 21 of the spring member an additional force is applied to an end part of each circlip in a direction such as to press the circlip harder against the interior surface. Thus there is an increased braking effect, especially in a collision situation when the weight of the person can be increased considerably.

If the person sitting on the seat wishes to adjust the seat height, the knob is turned manually thus rotating the input drive shaft and the first drive member mounted thereon. One or other of the sides 58 of the cut-out portion 50 press against the end portions 15 or 17 of the spring member 16, depending on the direction of rotation, and the associated end part of the circlips is pulled in a direction such as to reduce the pressure applied by the circlip against the interior surface of the drum thus releasing the braking action. The whole assembly within the drum moves since the centre portion 21 of the spring member pushes against one or other side of the slot 68 in the tongue 66 in the second drive member 20.

The output drive shaft 14 thus rotates in the same direction as the input drive shaft 12 and the seat is raised or lowered. Once the person seated on the seat stops rotating the knob the braking pressure of the circlips is immediately restored.

The particular construction and arrangement of the mechanism described, and in particular of the spring member 16 and circlips 22 prevent any free play occurring and no unwanted rattle occurs.

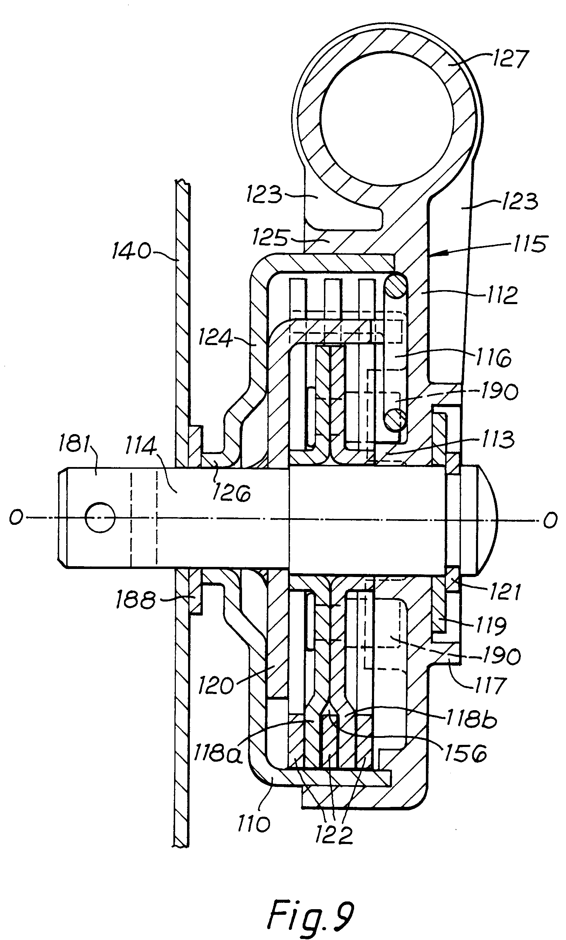

As can be seen in Figures 9-19 the second embodiment of the invention comprises a drum 110, an input drive element in the form of a cylindrical cover 112, an output drive element in the form of a shaft 114, a spring member 116, a first drive member 118, a second drive member 120 and three friction members 122.

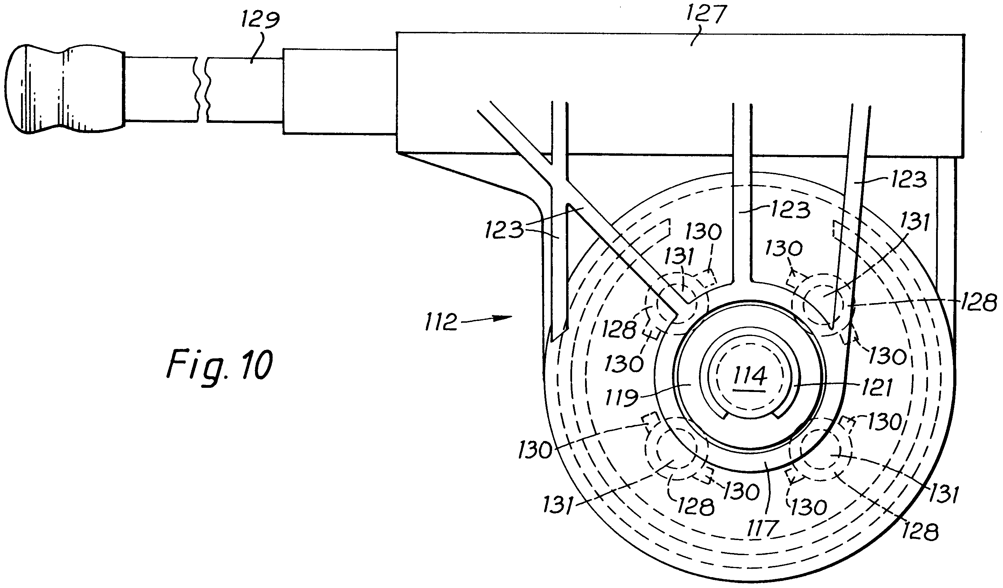

The drum 110 which together with the cover 112 provides a housing for the mechanism has a circular opening formed in the centre of its rear face 124, the opening being edged by a circular flange and in which the output drive member in the form of a shaft 114 is freely rotatably located. The front of the drum 110 is open, and is covered by the generally cylindrical input drive element 112 shown in Figure 10. The drum 110 may be provided with fixing means (none shown) for mounting the whole mechanism on the side of a vehicle seat frame 140.

The input drive element comprises a moulded drive cover 112 made of reinforced plastic material e.g. Nylon 66 having a 30% glass filling.

The cover 112 has a circular aperture surrounded by an inwardly-projecting flange 113 having the same internal diameter as the aperture. On the outer surface 115 of the cover 112 is an outwardly projecting circular rib 117 concentric with the aperture and defining a shallow circular depression. The output drive shaft 114 is freely rotatable in the aperture and is retained in position by a washer 119 located in the depression and a circlip 121 located in a groove 126 adjacent the end of the drive shaft 114 and abutting the outer surface of the washer 119.

The cover has a cylindrical edge portion 125 which is concentric with and slidably engages the outer surface of the drum 110. A plurality of strengthening ribs 123 provide the necessary rigidity. Formed integrally with the cover and located radially outwardly of the edge portion with respect to the drive shaft axis 0-0 so as to extend tangentially with respect thereto is a cylindrical housing enclosing a telescopically extending handle 129. The handle is shown in a partially extended position but is normally biassed by means of an internal coil spring (not shown) to a non-extended position.

Four small circular ribs 128 each supported by a pair of strengthening ribs 130 are moulded on the interior surface of the cover. These ribs define four circular cross-section recesses 131 for receiving rivets 190 which hold the first drive member 118 in position. Thus rotation of the cover 112 by means of the handle 129 causes simultaneous rotation of the first drive member 118 about the shaft axis 0-0.

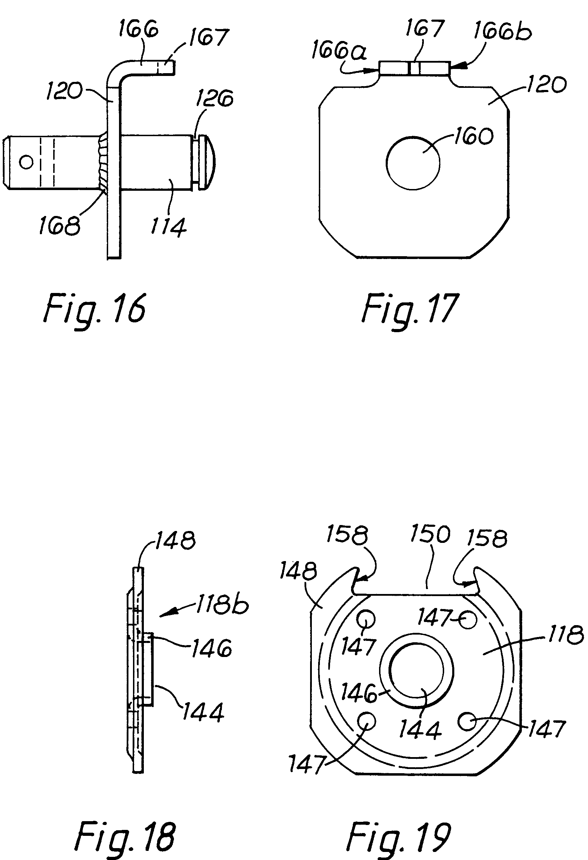

The first drive member 118 shown in Figures 18 and 19 comprises two similar sheet metal plates 118 and 118b having a circular form but with sides cut away to give the appearance of a square with rounded corners. Each plate is formed at its centre with a circular aperture 144 having an edge flange 146. The rounded corners are each part of a circle centred in the centre of the circular aperture 144 and having a diameter slightly less than that of the internal diameter of the drum 110 within which the member is located. As can be seen especially in Figure 18 the edge of each plate is formed with a displaced region 148. One side of each plate is formed with a cut-away region 150 and four holes 147 as shown in Figure 19. The plates 118a and 118b are formed by appropriate pressing and piercing operations and spot welded together in back-to-back relationship: so that a peripheral groove 156 is formed between the displaced regions 148. The drive member 118 is positioned as shown in Figure 9 with the flanges 146 lying radially outwards of the outer surface of the drive shaft 114 and is capable of slidably rotating thereon. The drive member is connected as mentioned above by means of four rivets located one in each of the apertures 147 and a corresponding recess 131 in the cover 112. In the assembled mechanism the two parallel end portions 115 and 117 of the spring member 116 touch the two sides 158 of the cut-away portion 150.

The second drive member 120 shown in Figures 16 and 17 is also a plate of circular form having sides cut away to provide a square appearance. A generally circular aperture 160 is formed at the plate centre. The corners of the plate are rounded and the outer surfaces form parts of a circle having a diameter less than that of the interior diameter of the drum 110 and slightly less than the diameter of the rounded corners of the first drive member 118. One side of the second drive member is formed with a generally square tongue 166 which extends generally perpendicularly to the plane of the main part of the member. When assembled in the mechanism the two sides 166a and 166b of the tongue abut the end faces 173 and 175 of the circlips 122 as will be described. At the centre of the tongue further from the main part of the member 120 is a short slot 167 extending inwards from the tongue edge. The member 120 is positioned on the drive shaft 114 as shown in Figure 16 and attached thereto by a weld 168 at the edge of the aperture.

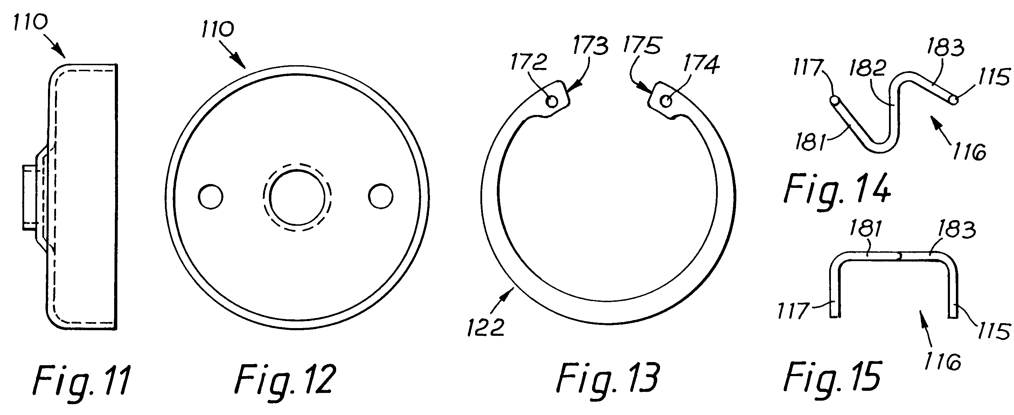

The spring member 116 shown in Figures 14 and 15 is formed from spring wire into the shape as shown. There are two parallel end portions 115 and 117 which in the mechanism extend parallel to the axis 0-0 of the drive shaft 114. In between there are three straight portions 181, 182 and 183, all five portions 115, 183, 182, 181 and 117 being connected by curved portions. The central straight portion 182 extends radially of the drum. In the assembled mechanism the three straight portions 181, 182 and 183 lie against the interior surface of the cover 112 and the two end portions 115 and 117 touchingly engage the sides 158 of the cutaway portion 150 of the first drive member 118. The central straight portion 182 extends through the slot 167 in the tongue 166 to prevent rattle.

The three friction members 122 are all standard circlips formed from spring steel sheet and have the shape shown in Figure 13. Before being assembled in the mechanism, the outer diameter of each circlip is slightly greater than the diameter of the interior surface of the drum. The two end parts of the circlips are formed with small holes 172 and 174. In the assembled mechanism the holes 172 receive the end portion 115 of the spring member 116, the holes 174 the end portion 117, the end face 173 abuts the side 166a of the tongue 166 and the end face 175 abuts the side 166b.

To assemble the mechanism the handle 129 is fitted to the cover 112 and the second drive member welded to the drive shaft 114. The three friction members 122, the first drive member 118 and the spring member 116 are assembled together, and this assembly positioned on the drive shaft 111 with the tongue of the second drive member 120 positioned in the cut-away portion 150 of the first drive member 118. Four rivets are positioned one in each of the holes 147 of the first drive member and the assembly positioned within the cover 112 so that the heads of the rivets 190 locate one in each of the recesses 131 on the interior surface of the cover and the shaft 114 extends through the central aperture in the cover 112. The shaft and the assembly of first drive member, second drive member, three friction members and spring member are held in position by the washer 119 and insertion of the circlip 121 into the groove 126 of the drive shaft 114. The drum 124 is then positioned on the drive shaft 114 with its outer surface touching the interior surface of the cover. The drum must be forced into position because the friction members, i e circlips, being of an external diameter slightly larger than the interior cylindrical surface of the drum press against it. The drum is held in position on the shaft (which is freely rotatable with respect thereto) by means of a fastener 188. The whole mechanism is attached to the seat frame 140 by suitable means (not shown) to prevent rotation of the drum with respect to the frame. The portion 181 of the shaft 114 within the seat frame is connected to the seat height adjustment mechanism which may include suitable levers and/or gears.

Normally, since the three friction members 118 press against the interior surface of the drum 110 there is no rotation of either the output drive member i.e. the shaft 114 or the input drive member i.e. the cover 112. The weight of a person sitting on the seat creates a torque which is applied to the output drive member 114 which tends to rotate and move the second drive member 120 with it. However, since the sides 166a and 166b of the tongue 166 of the second drive member abut the end faces 173 and 175 of the circlips 122 respectively and the tongue is attached to the central portion 182 of the spring member 116 an additional force is applied to an end part of each circlip in a direction such as to press the circlip harder against the interior surface. Thus there is an increased braking effect, especially in a collision situation when the weight of the person can be increased considerably.

If the seat occupant wishes to adjust the seat height the handle 129 is extended from its housing 127 and the cover 112 is rotated about the axis 0-0.

The first drive member 118, being attached to the cover 112 by the four rivets 190, also rotates. Depending on the direction of rotation one of the two sides 158 press against one of the two side portions 115 or 117 of the spring member 116 and the associated end parts of the friction members i.e. the circlips 122 are pulled in a direction such as to reduce the pressure applied by the circlips against the interior surface of the drum 124 thus reducing the braking action. Simultaneously the operative end faces of the circlips are also pressed against the adjacent side 166a or 166b of the tongue 166 of the second drive member 120, which being welded to the shaft 114, causes it to rotate and thus operate the seat height adjustment mechanism. Once the seat occupant ceases rotating the handle 129 it returns to its non-extended position on the housing 127 and the braking pressure of the circlips 122 is restored. The handle 129 is normally positioned in a near-horizontal position and this is arranged to coincide with the lowest position of the seat. The gearing of the seat height adjustment mechanism is such that rotating the handle through about 100° i.e. to just beyond a vertical position causes the seat to be raised to its maximum height.

The particular construction and arrangement of the mechanism of the second embodiment described, and in particular of the spring member 116 and circlips 122 prevent any free play and no unwanted rattle occurs.

## Claims

1.  A drum lock mechanism comprising, in combination, a rotatable input drive element (12;112), a rotatable output drive element (14;114) drivably connected to the input drive element (12;112) through first (18;118) and second (20;120) drive members and a spring member (16;116), and a drum (10;110) having an interior cylindrical surface, characterised in that at least one friction member (22;122) is provided and is normally operably engaged by the spring member (16;116) to press the friction member (22;122) into braking engagement with the interior surface, and the first drive member (18;118) is constructed to rotate with the input drive element (12;112) and is engageable with the spring member (16;116) on application of a torque to rotate the input element (12;112) to release the braking pressure on the friction member (22;122) sufficiently to allow rotation of the input (12;112) and output (14;114) drive elements.

2.  A mechanism according to Claim 1 characterised in that the second drive member (20;120) is constructed to rotate with the output drive element (14;114) and is engageable with the spring member (16;116).

3.  A mechanism according to Claim 1 or Claim 2 characterised in that the friction member (22;122) comprises a circlip, the outer diameter of which is slightly more than the diameter of the interior surface of the drum (10;110) before assembly.

4.  A mechanism according to Claim 1 or Claim 2 characterised in that three friction members (22;122) each in the form of a circlip are provided, the outer diameter of each circlip being slightly more than the interior surface of the drum (10;110) before assembly.

5.  A mechanism according to Claim 3 or Claim 4 characterised in that the first drive member (18;118) is in the form of a plate of generally circular form having a diameter slightly less than that of the interior surface of the drum (10;110), part of the outer periphery of the plate being cut away (50;150); the second drive member (20;120) is in the form of a plate of circular form having a diameter slightly less than the interior surface of the drum (10;110), part of the outer surface of the plate being cut away (70) and also formed with a tongue (66;166) which extends generally perpendicularly to the plane of the plate and generally parallel to the plate axis; and the spring member (16;116) comprises a length of wire bent so as to have two end portions (15,17;115,117) which extend parallel to the axis of rotation (0-0) of one of the drive elements through holes (72,74;172,174) in the ends of the circlips (22;122) and lie in braking engagement with the sides (58;158) of the cut-away portion (50;150) in the plate forming the first drive member (18;118) and a central portion (21;182) extending radially with respect to the axis (0-0) of the said one drive element and through a slot (68;168) in the tongue (66;166) in the plate forming the second drive member (20;120).

6.  A mechanism according to Claim 5 characterised in that each end face (73,75;173,175) of the circlip (22;122) abuts the tongue (66;166) whereby application of a force to the end part (73,75;173,175) of a circlip (22;122) presses the circlip against the interior surface.

7.  A mechanism according to any one of the preceding claims characterised in that one of the drive elements (14) is formed with an aperture or bore (42) into which the other of the drive elements (12) fits.

8.  A mechanism according to any one of the preceding claims characterised in that the input drive element (12) comprises a shaft.

9. A mechanism according to any one of the preceding claims characterised in that the input drive element (112) comprises a drive cover.

10. A mechanism according to any one of the preceding claims characterised in that the output drive element (12;112) comprises a shaft.

11. A mechanism according to any one of the preceding claims characterised in that the drum (10;110) provides a housing for at least part of the mechanism.

Fig. 1

EP 0 479 449 A1

Fig. 2

Fig. 7

Fig. 3

Fig. 8

Fig. 4

Fig. 5

Fig. 6

9

*Fig.9*

Fig. 10

127
129
123
123
123
131
130
131
130
112
128
130
114
121
119
130
130
130
130
131
128
130
131
128
117
130
128

EP 0 479 449 A1

Fig. 11

Fig. 12

Fig. 13

Fig. 14

Fig. 15

EP 0 479 449 A1

166   167
120   126

168   114

Fig. 16

166a   167   166b
120
160

Fig. 17

148
118b
146
144

Fig. 18

158   150   158
148   118
147
147
146
144   147
147

Fig. 19

EP 0 479 449 A1

European Patent Office

**EUROPEAN SEARCH REPORT**

Application Number

EP 91 30 8548

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 370 502 (RENTROP, HUBBERT & WAGNER) <br><br> * column 2, line 14 - column 3, line 16; figures * | 1,2,7,8, 10,11 | B60N2/02 <br> F16D43/02 |
| X | FR-A-2 474 719 (KEIPER AUTOMOBILTECHNIK) <br> * page 4 - page 7; figures 1-3 * | 1,9 | |
| X | EP-A-0 053 209 (WEST) <br> * page 8, line 25 - page 10, line 11; figures 3-9 * | 1 | |
| A | | 3 | |
| X | DE-A-3 819 345 (KEIPER RECARD) <br> * abstract; figures 1-4 * | 1 | |
| X | GB-A-2 211 565 (OHI SEISAKUSHO) <br> * claims; figures * | 1 | |
| A | FR-A-2 254 735 (STIEBER) <br> * claims * | 1,3 | |
| | | | TECHNICAL FIELDS SEARCHED (Int. Cl.5) <br><br> B60N <br> F16D |

The present search report has been drawn up for all claims

| Place of search | Date of completion of the search | Examiner |
|---|---|---|
| THE HAGUE | 10 JANUARY 1992 | GATTI Carlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

14